# FASCICULE DE BREVET EUROPEEN

(11) **EP 4 179 418 B1**
(45) Date de publication et mention de la délivrance du brevet: **10.04.2024**
(21) Numéro de dépôt: 21735332.5
(22) Date de dépôt: 01.07.2021
(51) Int. Cl.: H04L 67/12

(54) **SYSTÈME DE COMMUNICATION POUR AÉRONEF**
KOMMUNIKATIONSSYSTEM FÜR FLUGZEUGE
COMMUNICATION SYSTEM FOR AIRCRAFT

(30) Priorité: 09.07.2020 FR 2007288
(43) Date de publication de la demande: 17.05.2023
(73) Titulaire: Safran Seats, 78370 Plaisir (FR); Safran Electronics & Defense, 75015 Paris (FR)
(72) Inventeur: GIORGIO, Roméo, 77550 MOISSY-CRAMAYEL (FR); FANTON, Nicolas, 77550 MOISSY-CRAMAYEL (FR); LIPARI, Nicolas, 77550 MOISSY-CRAMAYEL (FR); OBADIA, Jean-Marc, 77550 MOISSY-CRAMAYEL (FR)
(74) Mandataire: Cabinet Boettcher
(86) Numéro de dépôt international: PCT/EP2021/068264
(87) Numéro de publication internationale: WO 2022/008354

(56) Documents cités:
- US-A1- 2011 087 396

## Description

La présente invention se rapporte au domaine des systèmes de communication pour aéronef pour permettre une communication interne à l'aéronef.

### ARRIERE PLAN DE L'INVENTION

Il est connu par exemple du protocole IEEE 802.15.4, qui est un protocole de communication par réseau sans fil, de partager entre des dispositifs communicants devant envoyer des données vers un concentrateur de données, des canaux, c'est-à-dire des plages de fréquence de communication, et des fenêtres temporelles d'émission.

Pour cela, ce protocole propose d'attribuer, à chaque dispositif communicant d'une pluralité de dispositifs communicants, un canal de communication (c'est-à-dire une plage de fréquence propre au canal) et une fenêtre temporelle de communication dans laquelle ce dispositif communicant est le seul des dispositifs de la pluralité de dispositifs communicants qui est autorisé à envoyer des données sur le canal de communication qui lui est attribué.

Le but d'un tel partage de canaux et fenêtres temporelles entre les dispositifs est de limiter le risque d'interférences entre les données transmises par les différents dispositifs communicants tout en maximisant le débit de données transmissibles vers le concentrateur de données.

Selon ce protocole, pour éviter que le concentrateur de données ne reçoive et ne prenne en compte des données provenant de dispositifs communicants qui ne sont pas autorisés à lui envoyer des données, chaque dispositif communicant autorisé à communiquer avec le concentrateur de données est configuré manuellement et appairé manuellement avec le concentrateur de données qui lui correspond.

A chaque ajout ou suppression d'un dispositif communicant appairé avec le concentrateur de données, une opération de configuration manuelle doit être mise en oeuvre.

Une opération de configuration manuelle nécessite l'intervention d'un technicien sur le concentrateur de données et sur les dispositifs à appairer ce qui peut nécessiter un arrêt au moins partiel de fonctionnement du système de communication.

De telles opérations de configuration manuelle sont donc consommatrices de temps et d'énergie électrique (énergie nécessaire au fonctionnement des dispositifs pendant la configuration) et sont susceptibles de générer des erreurs de configuration.

Pour cela, ce protocole semble incompatible avec les besoins d'un système de communication pour aéronef qui nécessite disoonibilité et fiabilité. Le document US 2011/087396 A1 (EREGEN SINEM COLERI [US] ET AL) 14 avril 2011 (2011-04-14) propose un procédé décrivant un concentrateur qui transmet des informations temporelles à des dispositifs communicants.

### OBJET DE L'INVENTION

Un objet de la présente invention est de fournir un système de communication pour aéronef permettant de résoudre tout ou partie des problèmes précités de l'art antérieur.

### RESUME DE L'INVENTION

A cet effet, l'invention porte essentiellement sur un système de communication pour aéronef, comprenant :
- un premier concentrateur de données
- une première pluralité de dispositifs communicants, chacun de ces dispositifs communicants étant adapté à envoyer des données au premier concentrateur par transmission sans fil, le premier concentrateur étant adapté pour réaliser un traitement des données envoyées par lesdits dispositifs communicants et reçus par ce premier concentrateur.

Le système de communication selon l'invention est essentiellement caractérisé en ce que le premier concentrateur est agencé pour diffuser, par transmission sans fil, au moins un signal de paramétrage d'au moins un cycle de fonctionnement du système de communication et chaque dispositif communicant donné de la première pluralité de dispositifs communicants est agencé pour envoyer au premier concentrateur (toujours via une transmission sans fil), en réponse à cet au moins un signal de paramétrage du cycle, un signal d'identification propre à ce dispositif communicant donné, le premier concentrateur étant agencé pour diffuser (toujours via une transmission sans fil) un ou plusieurs signaux d'affectation pour affecter une pluralité de fenêtres temporelles distinctes les unes des autres et valables pour le cycle de fonctionnement, chaque fenêtre temporelle étant affectée à un seul des dispositifs communicants (Di1, Di2) dont le premier concentrateur a reçu un signal d'identification propre et étant associée à au moins un canal de communication appartenant à une pluralité de canaux de communication de la transmission sans fil, chaque dispositif communicant donné étant agencé pour émettre des données à l'attention du premier concentrateur via ledit au moins un canal de communication associé à la fenêtre temporelle affectée à ce dispositif communicant donné uniquement pendant cette fenêtre temporelle (c'est-à-dire dans une fenêtre temporelle affectée qui se déroule pendant le cycle paramétré).

Pour la compréhension de l'invention, le terme transmission sans fil désigne une transmission de signaux ou de données via des ondes électromagnétiques, principalement des ondes radioélectriques.

Avec une telle transmission sans fil, les ondes émises se déplacent dans l'espace entre les dispositifs communicants et le ou les concentrateurs de données sans nécessiter de câbles de liaison reliant chaque dispositif au concentrateur (s) . Une transmission sans fil est par exemple et de manière non limitative, de type LoRa, éventuellement wifi ou Bluetooth ^{®}, mais il est aussi imaginable que la transmission sans fil comprenne une transmission par ondes lumineuses comme ce serait le cas avec une transmission sans fil LI-FI.

Chaque fenêtre temporelle est une fenêtre temporelle de communication définie pour le seul canal de communication qui lui est associé.

Le signal de paramétrage est un signal de paramétrage d'au moins un cycle qui est par la suite appelé cycle paramétré de fonctionnement du système de communication, cet au moins un cycle est préférentiellement le cycle courant de fonctionnement du système de communication, c'est-à-dire le cycle au cours duquel le premier concentrateur diffuse ledit au moins un signal de paramétrage.

L'affectation par le premier concentrateur, à un dispositif communicant donné, d'une fenêtre temporelle associée à un canal de communication et dédiée / affectée à ce seul dispositif communicant est particulièrement avantageuse car elle peut être automatisée tout en permettant d'éviter des collisions entre données lors de la transmission des données des différents dispositifs communicants vers le premier concentrateur.

D'autres avantages de l'invention seront présentés par la suite en référence à ses différents modes de réalisation.

L'invention porte également sur un procédé de communication dans un aéronef équipé d'un système de communication pour aéronef comprenant :
- un premier concentrateur de données
- une première pluralité de dispositifs communicants, chacun de ces dispositifs communicants étant adapté à envoyer des données au premier concentrateur par transmission sans fil, le premier concentrateur étant adapté pour réaliser un traitement des données envoyées par lesdits dispositifs communicants et reçues par ce premier concentrateur.

Ce procédé est essentiellement caractérisé en ce que :
- le premier concentrateur diffuse, par transmission sans fil, au moins un signal de paramétrage d'au moins un cycle de fonctionnement du système de communication ; puis
- chaque dispositif communicant donné de la première pluralité de dispositifs communicants envoie au premier concentrateur, en réponse à cet au moins un signal de paramétrage du cycle, un signal d'identification propre à ce dispositif communicant donné ; puis
- le premier concentrateur diffuse un ou plusieurs signaux d'affectation pour affecter une pluralité de fenêtres temporelles distinctes les unes des autres et valables pour le cycle de fonctionnement, chaque fenêtre temporelle étant affectée à un seul des dispositifs communicants dont le premier concentrateur a reçu un signal d'identification propre et étant associée à au moins un canal de communication d'une pluralité de canaux de communication de la transmission sans fil ; puis
- chaque dispositif communicant donné émet des données à l'attention du premier concentrateur, via ledit au moins un canal de communication associé à la fenêtre temporelle affectée à ce dispositif communicant donné, ces données étant émises uniquement pendant ladite fenêtre temporelle affectée à ce seul dispositif communicant donné.

Ce procédé présente les mêmes avantages que le système de communication selon l'invention.

Selon un autre aspect, l'invention porte également sur un aéronef comprenant un système de communication selon l'un quelconque des modes de réalisation du système selon l'invention.

Selon un autre aspect, l'invention porte également sur un aéronef comprenant un système de communication mettant en œuvre le procédé selon l'invention.

### BREVE DESCRIPTION DES DESSINS

D'autres caractéristiques et avantages de l'invention ressortiront clairement de la description qui en est faite ci-après, à titre indicatif et nullement limitatif, en référence aux dessins annexés, dans lesquels:

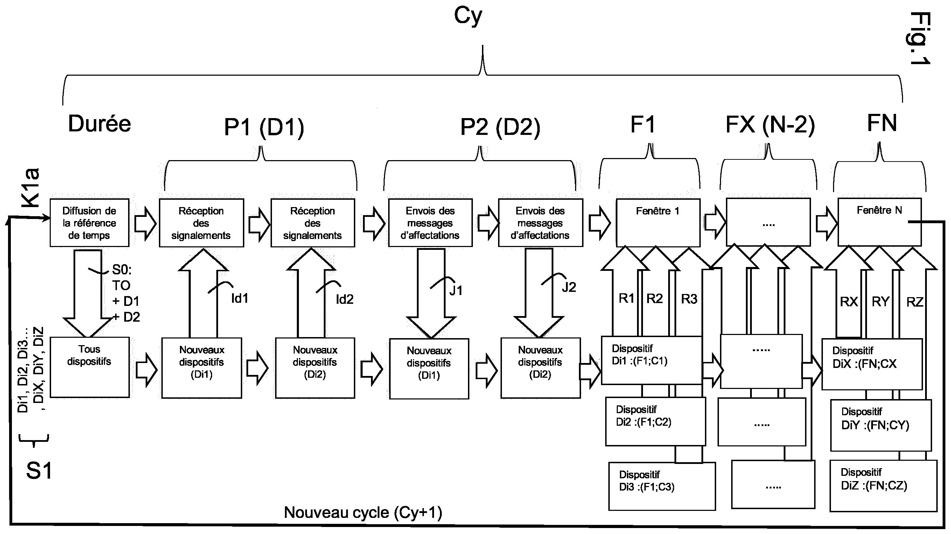

La figure 1 illustre le déroulement d'un cycle Cy de fonctionnement du système de communication selon l'invention (ce cycle Cy est le cycle paramétré par au moins un signal de paramétrage, il s'agit ici du cycle en cours, le cycle suivant ce cycle Cy étant un nouveau cycle noté Cy+1) permettant l'enrôlement, le paramétrage des dispositifs communicants Di1, Di2, Di3, DiX, DiY, DiZ devant respectivement transmettre des données R1, R2, R3, RX, RY, RZ au premier concentrateur de données K1a uniquement via des fenêtres temporelles affectées et sur des canaux respectivement associés à ces fenêtres ;

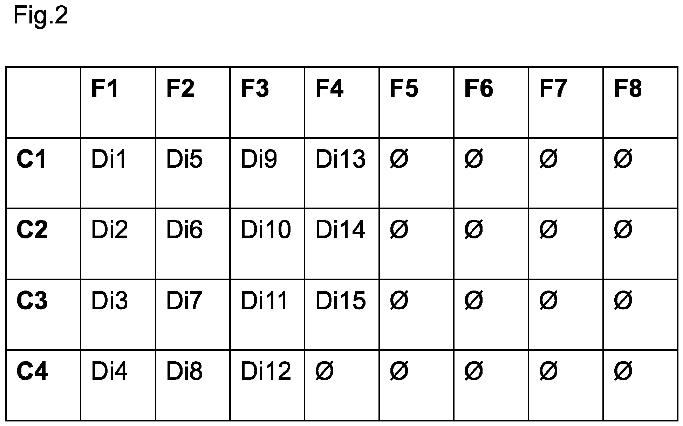

La figure 2 illustre un tableau donnant un exemple d'affectation à des dispositifs communicants Di1, Di2, Di3, jusqu'à Di15 de canaux de communication C1, C2, C3, C4 de transmission sans fil et de fenêtres temporelles F1, F2, F3, F4, F5, F6, F7, F8 associées à ces canaux, ce tableau montrant un cas d'affectation pour un système ne comportant qu'un seul concentrateur K1a recevant des données de quinze dispositifs communicants, les fenêtres temporelles non affectées sur un des canaux étant notées par le symbole ensemble vide « 0 »;

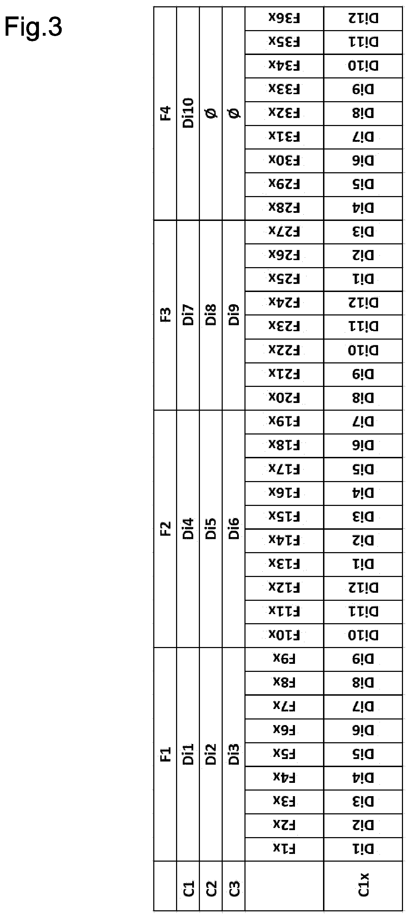

   La figure 3 illustre un tableau donnant un autre exemple d'affectation à des dispositifs communicants Di1, Di2, Di3 à Di10 de canaux de communication C1, C2, C3 de transmission sans fil et de fenêtres temporelles F1, F2, F3, F4, associées à ces canaux, et d'affectation de fenêtres ouvertes sur événements F1X, F2X, F3X, F4X, ..., F11X, F12X sur un canal C1X commun de transmission sans fil affecté aux différents dispositifs communicants, ici chaque dispositif communicant qui détecte un événement s'alloue sa propre fenêtre temporelle sur le canal commun C1X pour émettre des données vers le concentrateur K1a, ce
tableau montre un cas d'affectation pour un système S1 ne comportant qu'un seul concentrateur K1a recevant des données des quinze dispositifs communicants, toute fenêtre temporelle non affectée sur un des canaux est ici notée par le symbole ensemble vide « 0 »;

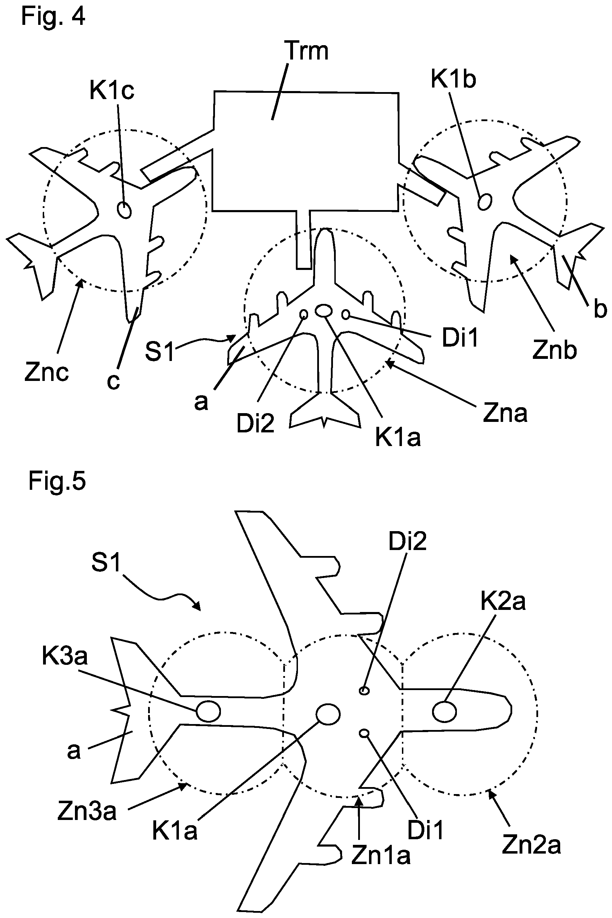

La figure 4 illustre un schéma de ségrégation spatiale pour gérer un cas où plusieurs aéronefs a, b, c sont à côté les uns des autres, ces aéronefs sont au parking devant un terminal aéroportuaire Trm, on constate que chacun de ces appareils a, b, c est équipé de son propre système de communication S1 selon l'invention et de son ou ses propres concentrateurs de données K1a, K1b, K1c et de ses propres dispositifs communicants Di1, Di2, chaque concentrateur définissant une zone spatiale de ségrégation Zna, Znb, Znc qui lui est propre, chaque concentrateur étant agencé pour ne tenir compte que des données transmises par des dispositifs communicants situés dans sa zone de ségrégation propre qui ne contient que des dispositifs embarqués sur l'aéronef avec le concentrateur ;
La figure 5 illustre un schéma de ségrégation spatiale pour gérer le cas où l'aéronef a est équipé d'un système de communication S1 selon l'invention comprenant plusieurs concentrateurs de données K1a, K2a, K3a embarqués sur l'aéronef a (ceci est particulièrement utile dans le cas d'un aéronef de grandes dimensions pour limiter la puissance des signaux nécessaires à la communication sans fil et/ou pour gérer un très grand nombre de dispositifs communicants embarqués), ici chaque concentrateur K1a, K2a, K3a définit sa propre zone spatiale de ségrégation Zn1a, Zn2a, Zn3a, chaque concentrateur K1a, K2a, K3a ne tenant compte que des données transmises par des dispositifs communicants situés dans sa propre zone de ségrégation, ces zones de ségrégation étant disjointes les unes des autres, c'est-à-dire qu'elles ne se recouvrent pas.

### DESCRIPTION DETAILLEE DE L'INVENTION

La présente invention concerne le domaine de la transmission de données dans un même aéronef via une transmission sans fil.

Les dispositifs communicants forment une flotte d'objets et, en ce sens, la présente invention peut utiliser des protocoles de communication du domaine de l'internet des objets « IOT » qui sont usuellement peu adaptés au domaine de la transmission de données intra aéronef. En ce sens, la présente invention est particulièrement économique à mettre en œuvre tout en permettant un respect des règles propres à l'aéronautique.

Comme on le verra par la suite, cette invention est particulièrement avantageuse pour collecter des données variées relatives à des équipements de l'aéronef comme ses sièges passager, ses roues, ou d'autres équipements.

En référence au figures 1 à 5, l'invention concerne principalement un système de communication S1 pour un aéronef a (ce système de communication est agencé pour réaliser des communications internes à un aéronef donné).

Ce système S1 comprend :
- un premier concentrateur de données K1a et éventuellement plusieurs concentrateurs de données K2a, K3a ; et
- une première pluralité de dispositifs communicants Di1, Di2, Di3, ..., DiX, DiY, DiZ, chacun de ces dispositifs communicants étant adapté à envoyer, par transmission sans fil, des données au premier concentrateur K1a ou à un autre des concentrateurs.

La description suivante se focalise sur les échanges entre le premier concentrateur et des dispositifs communicants de la première pluralité de dispositifs, mais les mêmes caractéristiques sont applicables pour des échanges entre certains des dispositifs de la première pluralité et d'autres concentrateurs de données du système.

Chaque concentrateur donné embarqué sur l'aéronef, en l'occurrence ici le premier concentrateur K1a, est agencé pour traiter les données qu'il reçoit, via la transmission sans fil, de la part des dispositifs communicants de la première pluralité de dispositifs communicants.

Un tel traitement des données peut comprendre un enregistrement de ces données et/ou une analyse, par exemple une comparaison et/ou une retransmission vers un ou plusieurs autres éléments du système de communication de l'aéronef tels un processeur de l'aéronef, un enregistreur de vol de l'aéronef ou vers un élément externe au système de communication de l'aéronef tel qu'un récepteur au sol ou un récepteur embarqué sur un autre aéronef.

Ainsi, le premier concentrateur K1a comprend, de façon connue en elle-même, un émetteur récepteur de signaux radioélectriques relié à un circuit électronique adapté / agencé pour réaliser un traitement des données envoyées par lesdits dispositifs communicants et reçues par ce premier concentrateur.

Le premier concentrateur K1a est également agencé pour diffuser, par transmission sans fil, au moins un signal de paramétrage S0 d'au moins un cycle de fonctionnement du système de communication S1.

Il en est de même pour chacun des autres concentrateurs de données K2a, K3a.

Chaque dispositif communicant donné Di1, Di2, Di3,..., DiX, DiY, DiZ de la première pluralité de dispositifs communicants est agencé pour envoyer au concentrateur auquel il est affecté, en l'occurrence le premier concentrateur K1a, en réponse à cet au moins un signal de paramétrage S0 du cycle, un signal d'identification propre à ce dispositif communicant donné. En l'occurrence, chaque dispositif communicant envoie un seul signal d'identification qui lui est propre. Dans l'exemple illustré par la figure 1, le dispositif communicant Di1 transmet son signal d'identification propre Id1 et le dispositif communicant Di2 transmet son signal d'identification propre Id2. Chaque dispositif communicant a une structure connue en elle-même et comprend un émetteur récepteur de signaux radioélectriques relié à un circuit électronique adapté / agencé pour réaliser un traitement des données envoyées et reçues.

Chaque signal d'identification d'un dispositif communiquant donné est unique, c'est à dire que chaque signal d'identification d'un des dispositifs communicants contient un identifiant propre à ce signal et unique parmi tous les identifiants des dispositifs communicants du système de communication.

Le premier concentrateur K1a est agencé pour diffuser un ou plusieurs signaux d'affectation pour affecter une pluralité de fenêtres temporelles distinctes les unes des autres et valables au moins pour le cycle de fonctionnement. En l'occurrence, dans l'exemple de la figure 1, deux signaux d'affectation J1, J2 sont diffusés par le premier concentrateur K1a pour affecter une fenêtre F1. Le signal J1 étant destiné au dispositif Di1 pour lui affecter la fenêtre temporelle F1. Le signal J2 est ici destiné au dispositif Di2 afin de lui affecter une fenêtre temporelle. Dans cet exemple la même fenêtre F1 est affectée aux deux dispositifs Di1, Di2, mais on pourrait aussi affecter la fenêtre F1 au seul dispositif Di1 et une autre fenêtre temporelle F2 à l'autre dispositif Di2. Comme on le verra par la suite, on peut décider qu'une fenêtre donnée soit affectée à un seul des dispositifs ou au contraire qu'une même fenêtre temporelle soit affectée à plusieurs dispositifs communicants. De même, un signal d'affectation donné peut être utilisé pour affecter plusieurs fenêtres à un même dispositif.

Dans un mode de réalisation particulier, on peut faire en sorte que chaque fenêtre temporelle affectée soit affectée à un seul des dispositifs communicants Di1, Di2 dont le premier concentrateur K1a a reçu un signal d'identification propre et soit associée à au moins un canal de communication choisi dans d'une pluralité de canaux de communication de la transmission sans fil.

Bien entendu, dans d'autres modes de réalisation, on pourrait faire en sorte que certaines au moins des fenêtres temporelles soient affectées à plusieurs dispositifs. Dans ce cas on fait préférentiellement en sorte que les canaux soient affectés de manière à ce qu'il existe un couple unique par dispositif formé d'une fenêtre donnée et d'un canal donné. Ceci permet d'éviter un risque de collision lors de la transmission des données.

Dans l'exemple illustré à la figure 2, on a une pluralité de fenêtres temporelles F1 à F8 et une pluralité de canaux comprend les canaux C1, C2, C3, C4 et une pluralité de dispositifs Di1 à Di15, à chaque dispositif donné est affecté un couple unique formé d'une fenêtre et d'un canal. Dans cet exemple le couple constitué de la fenêtre F1 et du canal C1 est affecté au dispositif Di1, le couple F1/C2 est affecté au dispositif Di2 et le couple F2/C1 est affecté au dispositif Di5.

Comme on le comprend de l'exemple illustré à la figure 1, chaque dispositif communicant donné Di1, Di2, Di3,..., DiX, DiY, DiZ est également agencé pour émettre des données R1, R2, R3, ..., RX, RY, RZ à l'attention du concentrateur auquel il est affecté, via ledit au moins un canal de communication et la fenêtre temporelle qui sont affectés à ce dispositif communicant donné et uniquement pendant la fenêtre temporelle ainsi affectée.

Dans cet exemple, tous les dispositifs Di1, Di2, Di3,..., DiX, DiY, DiZ sont affectés à un même concentrateur K1a. Le dispositif Di1 émet ses données R1 vers le concentrateur K1a via la F1 et le canal C1 qui lui sont affectés. Le dispositif DiZ émet ses données RZ vers le concentrateur K1a via la FN et le canal CZ qui lui sont affectés.

Cette invention permet aux différents dispositifs communicants d'envoyer des données à un même ou plusieurs concentrateurs via un même canal ou via plusieurs canaux de communication de transmission sans fil tout en supprimant le risque de collision de ces données puisque, sur un canal donné, chaque dispositif communiquant ne peut émettre que pendant une ou plusieurs fenêtres temporelles qui est / sont affectées à ce seul dispositif communicant.

C'est donc le ou les concentrateurs de données qui en affectant les fenêtres aux différents dispositifs fixent des règles de ségrégation temporelle et fréquentielle pour la transmission des données vers le ou les concentrateurs de données (sur l'exemple de la figure 5, les données des différents dispositifs peuvent être transmises sans risque de collision vers trois K1a, K2a, K3a).

En dehors du cas du canal commun C1X qui sera présenté plus loin, chaque concentrateur affecte les fenêtres aux dispositifs communicants de manière que chaque fenêtre temporelle affectée associée à un canal donné ne soit affectée qu'à un seul desdits dispositifs communicants.

Idéalement chaque dispositif communicant Di1, Di2, Di3, ..., DiX, DiY, DiZ possède sa propre mémoire pour y mémoriser les évènements qu'il détecte ou les caractéristiques qu'il mesure avant de les transmettre au concentrateur de données correspondant via l'envoi de données.

De même, chaque dispositif communicant Di1, Di2, Di3, ..., DiX, DiY, DiZ est équipé de ses propres moyens de communication (antenne, carte réseau ou autre) adaptés à permettre l'échange de signaux et données depuis et vers de dispositif communicant et via la transmission sans fil.

Chaque concentrateur est également équipé de ses propres moyens de communication ou, a minima, relié fonctionnellement à des moyens de communication externes au concentrateur. De tels moyens de communication comprennent par exemple une ou plusieurs antennes et une ou plusieurs cartes réseau adaptés à permettre l'échange de signaux et données depuis et vers ce concentrateur et via la transmission sans fil.

Le premier concentrateur K1a est préférentiellement agencé pour réaliser l'association de chaque fenêtre temporelle qu'il affecte avec ledit au moins un canal de communication de la pluralité de canaux et cette association est définie par des paramètres contenus dans le ou les signaux d'affectation. Ici le signal d'affectation J1 est destiné au dispositif Di1, le signa J2 est destiné au dispositif Di2. Pour un dispositif noté DiX, on aurait un signal d'affectation JX.

Les fenêtres temporelles associées à un même canal sont définies de manière à former une succession de fenêtres disjointes les unes des autres, c'est-à-dire qu'elles ne se chevauchent pas dans le temps.

Chacune de ces fenêtres temporelles est définie pour se dérouler pendant ledit au moins un cycle de fonctionnement du système, c'est-à-dire au moins le cycle paramétré par le signal de paramétrage S0 d'un cycle, et pour être valable pour un canal de communication donné.

Chaque dispositif communicant donné est agencé pour interpréter le ou les signaux d'affectation qu'il reçoit et qui comprennent les règles d'association qui correspondent à ce dispositif communicant donné.

Ainsi, chaque dispositif communicant donné interprète le ou les signaux d'affectation qui lui correspondent et qui indiquent la ou les fenêtres temporelles qui lui est / sont affectées pour émettre des données R1, R2, R3, ..., RX, RY, RZ à l'attention du premier concentrateur K1a sur ledit au moins un canal de communication C1 associé.

Puis, en fonction de cette interprétation du / des signaux d'affectation, le dispositif communicant donné émet les données à l'attention du concentrateur qui lui correspond via le canal associé à la fenêtre temporelle et uniquement pendant la ou les fenêtres temporelles Fx affectées à ce dispositif communicant donné.

Plus précisément, chaque dispositif communicant donné est :
- d'une part agencé pour attendre le début de cette au moins une fenêtre temporelle qui lui est affectée pour ce cycle paramétré et qui est associée à un canal de communication donné avant de commencer à envoyer des données au premier concentrateur via ce canal de communication associé ; et

- d'autre part agencé pour arrêter d'envoyer ces données via ce même canal de communication affecté, à la fin de cette au moins une fenêtre temporelle qui lui est affectée.

En dehors de la fenêtre temporelle qui lui est affectée, chaque dispositif communicant donné reste silencieux sur le canal de communication associé qui lui est affecté.

Ainsi, on est certain que les données envoyées par plusieurs des dispositifs communicants, via un même canal de communication donné affecté à ces différents dispositifs communicants, ne se chevauchent pas.

Afin de programmer le cadencement des cycles et des dispositifs communicants du système S1, ledit premier concentrateur de données K1a (et préférentiellement chacun des autres concentrateurs) est lié fonctionnellement à un premier oscillateur pour mesurer un temps écoulé et ledit au moins un signal de paramétrage S0 de cycle contient une référence de temps T0.

Par exemple, la référence de temps T0 peut être propre à ce cycle paramétré, elle peut être un temps absolu ou simplement un signal de début de cycle paramétré (c'est-à-dire un « top départ » pour le cycle paramétré, ici le cycle en cours).

Le premier oscillateur est ici utilisé pour générer la référence de temps T0 et pour décompter une durée écoulée comme la durée D2 de la seconde plage temporelle P2.

Toujours pour cadencer le système S1, chaque dispositif communicant donné Di1, Di2, ..., DiX, DiY, DiZ comporte un oscillateur qui lui est propre et qui est agencé pour estimer une durée temporelle écoulée à compter de la réception de ladite référence de temps T0 par ce dispositif communicant donné.

L'oscillateur d'un dispositif communicant donné doit permettre d'estimer une durée de manière autonome sur au moins un cycle complet et préférentiellement sur plusieurs cycles consécutifs de fonctionnement du système.

Pour cela, chaque dispositif communicant donné est agencé pour utiliser la référence de temps T0 qu'il reçoit, pour régler un ou plusieurs paramètres réglables du dispositif pour en améliorer la précision et la synchronisation entre les différents éléments du système.

Idéalement, ce réglage doit permettre de maintenir un décalage temporel inférieur à 1ms par cycle de fonctionnement du système.

Ce mode de fonctionnement est particulièrement efficace pour réduire la consommation en énergie du dispositif communicant tout en permettant d'utiliser un oscillateur peu précis et donc moins coûteux.

Préférentiellement certains au moins des concentrateurs sont alimentés en énergie par le réseau d'alimentation électrique de l'aéronef. Les autres comportent une source d'alimentation en énergie électrique qui leur est propre et qui délivre une énergie électrique nécessaire à leur fonctionnement.

Chaque dispositif communicant donné Di1, Di2, Di3,..., DiX, DiY, DiZ comporte une source d'alimentation en énergie électrique qui lui est propre et qui délivre une énergie électrique nécessaire au fonctionnement de ce dispositif communicant donné.

Une telle source d'alimentation peut être une batterie ou un accumulateur ou toute autre source autonome sur plusieurs cycles. On pourrait aussi prévoir que certains au moins des dispositifs communicants soient reliés au réseau d'alimentation électrique de l'aéronef.

Toutefois, on préfèrera que les dispositifs communicants puissent fonctionner en autonomie énergétique sans avoir à être reliés au réseau d'alimentation électrique de l'aéronef.

Par fonctionnement du dispositif communicant, on entend que chaque dispositif communiquant donné utilise de l'énergie électrique délivrée par sa source d'alimentation pour exécuter chacune des fonctions pour lesquels il est agencé / adapté.

En l'occurrence, pendant son fonctionnement, le dispositif communicant utilise cette énergie pour recevoir des signaux diffusés par le premier concentrateur de données, estimer une durée de temps écoulé, mesurer des caractéristiques et/ou détecter des événements, envoyer des signaux, comme son signal d'identification, envoyer des données au premier concentrateur de données K1a ou à tout autre concentrateur de données qui lui correspond, certaines au moins de ces données étant représentatives des caractéristiques mesurées et/ou d'événements détectés par ce dispositif communicant donné Di1, Di2, Di3, ..., DiX, DiY, DiZ.

Un dispositif communicant transmet généralement, via la fenêtre temporelle qui lui est affectée sur un canal donné, des données de type régulier qui sont transmises à intervalles de temps régulier.

Comme on le verra par la suite, des données de type régulier sont par exemple des données relatives à des mesures effectuées régulièrement par un capteur du dispositif communicant, comme une mesure de température, de pression, de tension électrique, d'intensité électrique, d'effort mécanique, d'état physique.

Typiquement, les données envoyées par certains au moins des dispositifs communicants peuvent être des mesures effectuées par capteur, ces mesures étant préférentiellement comprises dans le groupe de mesures comprenant une mesure d'au moins une caractéristique physique propre à un siège donné de l'aéronef, une mesure d'au moins une caractéristique physique propre à une roue donnée de l'aéronef (bien entendu il pourrait aussi s'agir d'une mesure d'une caractéristique physique propre à un autre élément de l'aéronef), une mesure de déformation de siège d'aéronef (effectuée avec un capteur de déformation de siège associé à un dispositif communiquant qui lui correspond), une mesure de position de siège d'aéronef (effectuée avec un capteur de position intégré à un siège de l'aéronef et associé à un dispositif communiquant qui lui correspond), une mesure de pression (effectuée avec au moins un capteur de pression intégré à une roue ou pneu de l'aéronef et associé à un dispositif communiquant qui lui correspond), une mesure de température (effectuée avec au moins un capteur de température intégré à un siège d'aéronef ou à une roue ou pneu de l'aéronef et associé à un dispositif communiquant qui lui correspond).

Le fonctionnement du système de communication selon l'invention va maintenant être présenté en détail en référence à la figure 1.

Comme on le comprend de la figure 1 :
- ledit au moins un signal de paramétrage S0 de cycle est envoyé par le concentrateur au début du cycle paramétré, ce signal S0 contient un premier paramètre de durée D1 propre au cycle paramétré (en l'occurrence le cycle paramétré est le cycle courant) et un second paramètre de durée D2 propre au cycle paramétré ;
- les dispositifs communicants sont agencés pour envoyer, au premier concentrateur K1a, leurs signaux d'identification respectifs par exemple Id1 ou Id2 pendant une première plage temporelle P1 de paramétrage du cycle qui est définie en fonction dudit premier paramètre de durée D1 (en l'occurrence la première plage temporelle P1 a une durée de valeur D1) ; et
- ledit concentrateur K1a est agencé pour attendre le début d'une seconde plage temporelle P2 de paramétrage du cycle qui est immédiatement postérieure à ladite première plage temporelle P1 de paramétrage du cycle et qui est définie en fonction dudit second paramètre de durée D2 (en l'occurrence la seconde plage temporelle P2 a une durée de valeur D2) pour diffuser pour chaque dispositif venant de se signaler un signal d'affectation, par exemple J1 ou J2 contenant des paramètres d'affectation, chaque paramètre d'affectation donné associant à chaque dispositif communicant donné Di1, Di2, ..., DiX, DiY, DiZ, ladite au moins une fenêtre temporelle affectée F1, F2, ..., FN à ce dispositif communicant donné Di1, Di2, ..., DiX, DiY, DiZ et associée à un canal de communication donné.

Comme cela est illustré sur la figure 1, le concentrateur de données K1a (comme n'importe quel autre concentrateur de données) émet plusieurs signaux d'affectation, chacun de ces signaux d'affectation étant dédié à un seul des dispositifs communicants.

Le premier paramètre de durée D1 peut être déterminé par le premier concentrateur en fonction d'un nombre de dispositifs communicants ayant transmis des signaux d'identification lors de précédents cycles (c'est-à-dire des cycles antérieurs au cycle paramétré) et/ou en fonction du nombre de dispositifs communicants ayant transmis des données lors d'un ou plusieurs cycles de fonctionnement antérieurs au cycle courant.

Le second paramètre de durée D2 peut être calculé en fonction de la durée D1 et/ou en fonction du nombre de dispositifs communicants ayant envoyé leurs signaux de d'identification pendant le cycle paramétré.

Il est à noter que les signaux d'identification peuvent être transmis via une voie dite « voie balise », en l'occurrence cette transmission pourrait se faire toujours via un même canal de communication pour tous les dispositifs ou via un canal sélectionné de manière aléatoire parmi une pluralité de canaux prédéfinis avec éventuellement un décalage temporel aléatoire par dispositif pour qu'il transmette son signal d'identification (on évite ainsi le risque de collision entre les signaux d'identification Id1, Id2...).

Selon le cas, le premier concentrateur Ak1 est agencé pour recevoir les signaux d'identification Id1, Id2... via un seul ou plusieurs des canaux.

Préférentiellement, chaque dispositif communicant donné Di1, Di2, Di3, ..., DiX, DiY, DiZ de la première pluralité de dispositifs communicants est agencé pour sélectionner un canal de communication de ladite pluralité (prédéfinie) de canaux de communication C1, C2, C3, C4, ..., CX, CY, CZ et pour utiliser ce canal de communication sélectionné pour envoyer son signal d'identification propre par exemple Id1 ou Id2 au premier concentrateur K1a.

Cela permet de réduire le temps nécessaire à la communication des différents signaux d'identification puisqu'ils peuvent être envoyés simultanément via plusieurs canaux. Alternativement il serait possible de prévoir que tous les signaux d'identification soient transmis via un seul et même canal de communication.

Dans un mode de réalisation particulier, chaque dispositif communicant donné Di1, Di2, Di3, ..., DiX, DiY, DiZ de la première pluralité de dispositifs communicants est agencé pour effectuer ladite sélection de canal de communication C1, C2, C3, C4, ..., CX, CY, CZ à l'aide d'une fonction de sélection aléatoire de canal.

En d'autres termes, le canal est ici sélectionné de manière aléatoire parmi la pluralité de canaux de communication prédéfinis C1, C2, C3, C4, ..., CX, CY, CZ. On réduit ainsi la probabilité de collision entre des signaux d'identification.

Toujours pour limiter le risque de collision lors de la transmission des signaux de signalisation, on peut faire en sorte que chaque dispositif communicant donné Di1, Di2, Di3, ..., DiX, DiY, DiZ de la première pluralité de dispositifs communicants soit agencé pour détecter si le canal sélectionné pour envoyer le signal d'identification est en cours d'utilisation par un autre desdits dispositifs communicants et pour envoyer son signal d'identification propre au premier concentrateur K1a via ce canal sélectionné uniquement lorsqu'aucun des autres dispositifs communicants Di1, Di2, Di3, ..., DiX, DiY, DiZ utilise ce canal sélectionné.

Il est également possible de faire en sorte que chaque dispositif communicant donné Di1, Di2, Di3, ..., DiX, DiY, DiZ de la première pluralité de dispositifs communicants soit agencé pour décompter une durée et pour débuter l'envoi de son signal d'identification propre après que la durée décomptée est égale à une valeur aléatoire comprise entre une durée minimale prédéterminée et une durée maximale prédéterminée.

Ainsi, comme les dispositifs communicants émettent leurs signaux d'identification à des moments aléatoires choisis pendant la première plage temporelle P1, on évite le risque de collision lors de la déclaration des signaux d'identification.

Afin qu'un dispositif défaillant n'occupe inutilement une fenêtre temporelle qui lui a été précédemment affectée avec le canal associé, on peut prévoir que le premier concentrateur soit agencé pour : lorsqu'un dispositif communicant n'a émis aucune donnée via une fenêtre temporelle pendant un nombre entier de cycles de fonctionnement successifs, affecter à un autre dispositif communicant ladite fenêtre temporelle, et le canal de communication associé, pour une pluralité de cycles de fonctionnement successifs du système.

Le nombre entier de cycles peut être égal ou supérieur à 1.

Si ce nombre de cycle est de 1, cela signifie que le premier concentrateur réaffectera pour le cycle en cours ladite fenêtre temporelle si aucune donnée n'a été transmise via cette fenêtre durant le cycle précédant le cycle en cours.

Si le nombre entier est de 2, cela signifie que sur les deux cycles qui précèdent le cycle en cours, aucune donnée n'a été reçue pendant la fenêtre temporelle.

Il est d'ailleurs possible que le premier concentrateur soit agencé pour détecter une défaillance d'un dispositif communicant donné si ce dispositif n'a pas transmis de données pendant un ou plusieurs cycles qui précèdent le cycle en cours. Dans une telle situation, le concentrateur génère une information de défaillance indiquant que ce dispositif communicant est potentiellement défaillant. Cela facilite grandement les opérations de maintenance du système selon l'invention.

Préférentiellement, en référence aux figures 4 et 5, le système de communication S1 comporte un module d'estimation d'éloignement pour estimer pour chaque dispositif communicant donné, par exemple Di1 ou Di2, dont le premier concentrateur a reçu un signal d'identification, une valeur d'éloignement de ce dispositif communicant donné vis-à-vis dudit premier concentrateur K1a.

Ce module d'estimation d'éloignement est préférentiellement relié fonctionnellement audit premier concentrateur pour lui transmettre les valeurs d'éloignement estimées de chacun de ces dispositifs communicants donnés.

Ledit premier concentrateur de données est préférentiellement agencé pour qu'en fonction de ces valeurs d'éloignement estimées, ce premier concentrateur identifie ceux des dispositifs communicants situés dans une zone de ségrégation Zna propre à ce premier concentrateur de données K1a et pour n'envoyer le ou les signaux d'affectation, par exemple J1 ou J2, qu'aux dispositifs communicants situés dans cette zone de ségrégation Zna.

Le module d'estimation d'éloignement peut être agencé pour estimer une valeur d'éloignement en fonction d'un temps observé de propagation des données via ce canal.

Le temps de propagation est généralement donné par un moyen de communication gérant la transmission sans fil.

Par exemple, dans le cas d'un moyen de communication de type LoRa 2.4GHz ce temps de communication est délivré grâce à une puce portant la référence SX1280.

Il est bien entendu possible d'utiliser un ou plusieurs modules d'estimation d'éloignement agencés pour calculer les distances d'éloignement des dispositifs vis-à-vis d'un ou plusieurs des concentrateurs du système par un calcul de triangulation et/ ou un calcul de trilatération.

Dans ce dernier cas, plusieurs antennes du système, espacées les unes des autres, peuvent capter un même signal d'identification d'un dispositif communicant donné et en fonction des décalages temporels constatés entre les moments de réception de ce signal par chacune de ces antennes, et en fonction des positions connues respectives de chacune de ces antennes dans l'aéronef, le calcul de triangulation ou de trilatération est alors possible pour déterminer la position spatiale de ce dispositif communicant vis-à-vis de ces antennes.

Connaissant les positions respectives des différents concentrateurs dans l'aéronef, les positions respectives de chacune de ces antennes dans l'aéronef et la position spatiale de ce dispositif communicant vis-à-vis des antennes, on en déduit la position du dispositif vis-à-vis de chacun des concentrateurs et par conséquent les valeurs d'éloignement de ce dispositif communicant vis-à-vis de chacun de ces concentrateurs. Ceci permet d'affecter chaque dispositif au concentrateur le plus proche parmi les concentrateurs K1a, K2a, K3a.

Préférentiellement, en référence à la figure 4, le système S1 peut comporter, en plus dudit premier concentrateur de données K1a, plusieurs autres concentrateurs de données K2a, K3a.

Dans ce cas, le module d'estimation d'éloignement est agencé pour estimer pour chaque dispositif communicant, au moins une valeur d'éloignement entre ce dispositif communicant et au moins un desdits concentrateurs de données K1a, K2a, K3a.

Le système S1 comporte ici un module d'affectation (non représenté) qui est agencé pour, en fonction de valeurs d'éloignement estimées entre les dispositifs communicants et les concentrateurs, affecter chacun des dispositifs communicants de la première pluralité de dispositifs communicants à un seul de ces concentrateurs de données K1a, K2a, K3a et chacun de ces dispositifs communicants étant agencé pour ne transmettre des données qu'au concentrateur auquel il est affecté.

Préférentiellement, ces concentrateurs de données K1a, K2a, K3a, sont reliés entre eux via un réseau de communication de l'aéronef qui est préférentiellement de type transmission sans fil mais qui pourrait être de type transmission filaire.

Dans le cas où un même signal d'identification Id1 d'un dispositif communicant donné est reçu par plusieurs des concentrateurs du système, alors un arbitrage est réalisé par le module d'affectation pour affecter le dispositif à un seul des concentrateurs.

En fonction des valeurs d'éloignement respectives de ce dispositif communicant donné vis-à-vis de chacun des concentrateurs K1a, K2a, K3a, alors le module d'affectation affecte ce dispositif communicant donné au concentrateur ayant la valeur d'éloignement la plus faible vis-à-vis de ce dispositif donné.

Ce dispositif donné est ainsi affecté à un seul concentrateur et dépendra de la zone de ségrégation spatiale de ce seul concentrateur.

Chaque concentrateur ne transmet son ou ses signaux d'affectation qu'aux dispositifs communicants qui lui sont affectés, c'est-à-dire qui sont compris dans sa zone de ségrégation.

L'appairage d'un dispositif communicant se fera donc toujours avec le concentrateur le plus proche et il n'y a donc aucun risque pour qu'un même dispositif soit affecté à plusieurs concentrateurs. Les concentrateurs sont agencés pour ignorer les signaux des dispositifs communicants se trouvant hors de sa zone, et inversement.

Toujours pour limiter le risque de collision, dans le cas où le système selon l'invention comporte plusieurs concentrateurs, ces concentrateurs sont agencés pour communiquer entre eux, par exemple via le réseau aéronef ou un canal spécifique de la transmission sans fil, de manière à ce que le cycle de fonctionnement du système soit découpé en plusieurs périodes de temps successives.

Chacune de ces périodes de temps données est dédiée aux transferts de signaux et de données de et vers un seul desdits concentrateurs affecté à cette période de temps donnée.

En l'occurrence sur une période de temps donnée dédiée à un seul des concentrateurs du système, seul ce concentrateur émet son signal de paramétrage, seul ce concentrateur reçoit les signaux d'identification respectifs de données envoyés par les dispositifs communicants de la pluralité de dispositifs communicants et, éventuellement seul ce concentrateur émet son ou ses signaux d'affectation.

Ce concentrateur est par ailleurs programmé pour n'émettre aucun signal tant que les périodes de temps allouées aux autres concentrateurs du système ne sont pas encore complètement écoulées.

Ainsi, chacun des concentrateurs peut échanger avec des dispositifs communicants pour permettre de les paramétrer au moins partiellement pendant une période de temps qui lui est dédiée et pendant laquelle les autres concentrateurs restent silencieux.

On évite ainsi les conflits de signaux ou données pendant le paramétrage et jusqu'à ce que les canaux et fenêtres soient affectées aux différents dispositifs communicants et différents concentrateurs.

Une fois que ces affectations de canaux et fenêtres ont été réalisées, les données des dispositifs communicants peuvent être transmises sur une même plage temporelle dans le respect des canaux et fenêtres respectivement affectées par les différents concentrateurs.

Ainsi, pendant un cycle de fonctionnement complet du système, les concentrateurs peuvent paramétrer les dispositifs, les dispositifs peuvent être affectés aux différents dispositifs et les dispositifs communicants peuvent envoyer leurs données R1, R2, R3, ..., RX, RY, RZ avec un très faible risque de collision.

Selon un mode de réalisation particulier, le premier concentrateur K1a (comme n'importe lequel des autres concentrateurs) peut être agencé pour recevoir, via un canal de communication C1x commun à plusieurs des dispositifs communicants Di1, Di2, Di3, ..., DiX, DiY, DiZ de la première pluralité de dispositifs communicants, des données R1, R2, R3, ..., RX, RY, RZ envoyées par ces dispositifs communicants et chacun de ces dispositifs communicants étant :
- d'une part agencé pour détecter si le canal de communication C1x commun est en cours d'utilisation par un autre des dispositifs communicants (Di1, Di2, Di3, ..., DiX, DiY, DiZ) ; et
- d'autre part agencé pour envoyer des données audit premier concentrateur de données (K1a) via ce canal de communication (C1x) commun, uniquement lorsque aucun des autres dispositifs communicants Di1, Di2, Di3, ..., DiX, DiY, DiZ utilise ce canal de communication commun C1x.

Un tel canal commun C1x appartient à la pluralité de canaux de la transmission sans fil mais il est préférentiellement utilisé pour envoyer des données relatives à des évènements irréguliers / ponctuels détectés par les dispositifs communicants.

Ainsi, si un dispositif communicant détecte un événement, il peut le signaler sans attendre la fin du cycle courant, dès que le canal commun C1x est libre.

Cela permet de réduire le délai de transmission de données relatives à un événement irrégulier.

Dans ce mode, chaque dispositif communicant donné envoyant des données au premier concentrateur via le canal commun C1x est de type communicant sur événement.

Chaque dispositif de type communicant sur événement est agencé pour définir la fenêtre temporelle F1x, F2x, F3x propre à ce dispositif communicant donné pour ce canal commun C1x, lorsqu'il détecte :
- d'une part qu'au moins une donnée à envoyer au premier concentrateur K1a est stockée dans une zone de mémoire propre à ce dispositif communicant donné ; et que

- d'autre part aucun autre dispositif communicant du type communicant sur événement n'émet sur ce canal commun C1x.

Un dispositif communicant de type sur événement transmet généralement des données de type irrégulier, une telle transmission de données étant déclenchée par la détection d'un évènement (par exemple un ou plusieurs évènements ponctuels) par au moins un capteur du dispositif communicant du second type.

Le dispositif communicant de type sur événement, à l'aide de son ou de ses capteurs, détecte l'évènement et génère une donnée dans une zone mémoire de ce dispositif puis il cherche à identifier si le canal commun C1x est disponible (c'est-à-dire qu'aucune donnée n'est en cours de transmission sur ce canal C1x) pour envoyer cette donnée.

Si aucun autre dispositif n'émet sur ce canal commun C1x alors ce dispositif du second type crée sa propre fenêtre temporelle ou utilise une fenêtre temporelle encore libre et prédéfinie par un paramètre de configuration de fenêtres pour ce canal commun C1x. Ce paramètre de configuration de fenêtre du canal C1x peut, par exemple, avoir été transmis via le signal de configuration S0, par exemple en début du cycle courant.

L'envoi de la donnée de type irrégulier, préalablement stockée dans la zone mémoire, est alors déclenché par le dispositif communicant de type sur événement.

Ce déclenchement peut être immédiat ou différé après écoulement d'une durée aléatoire estimée à l'aide de l'oscillateur du dispositif communicant.

Ceci est avantageux dans le cas où plusieurs évènements sont détectés simultanément par plusieurs dispositifs du second type, pour éviter le risque que les données de type irrégulier transmises par ces dispositifs communicants n'entrent en collision dans une même fenêtre du canal commun C1x.

Bien entendu, le concentrateur peut être agencé pour transmettre à certains au moins des dispositifs, des signaux d'affectation affectant à chaque dispositif donné une des fenêtres temporelles (sur l'exemple de la figure 3, pour le canal commun C1x, la fenêtre temporelle F1x est affectée pour le dispositif Di1, la fenêtre F2x est affectée au dispositif Di2).

Dans ce mode, chaque dispositif donné est agencé pour transmettre des données (typiquement des données de type irrégulier) via le canal commun C1x uniquement pendant la fenêtre temporelle qui lui est affectée pour ce canal commun C1x.

Ce mode de réalisation permet de se passer du besoin de détection d'usage du canal de communication commun C1x par un autre des dispositifs communicants.

Ceci est économique d'un point de vue énergétique puisque, pour ce canal commun C1x, chaque dispositif donné peut rester en veille sur toutes les périodes en dehors de la fenêtre temporelle qui lui a été affectée.

Le concentrateur qui est agencé pour écouter plusieurs canaux simultanément peut ainsi :
- d'une part recevoir des données de type régulier transmises via un ou plusieurs canaux C1, C2, C3 ...CX, CY, CZ affectés à plusieurs dispositifs Di1, Di2, Di3, ... DiX, DiY, DiZ et via les fenêtres temporelles correspondantes F1, ..., FX, FX(N-1), FN, préalablement affectées par ce premier concentrateur K1a ; et
- d'autre part recevoir des données de type irrégulier transmises via un canal commun C1x à plusieurs des dispositifs communicants de type sur événement, chacun de ces dispositifs choisissant lui-même (comme expliqué précédemment), la fenêtre temporelle à utiliser sur ce canal commun C1x.

Des données de type irrégulier sont par exemple de données relatives à un événement comme le passage d'un seuil prédéterminé de pression, de température, de tension électrique, d'intensité électrique, de position, d'effort mécanique, d'état physique. Par exemple, lorsque le dispositif communicant est positionné sur un pneu de l'aéronef, l'évènement peut être une baisse de pression sous un seuil donné ou une augmentation de pression au-delà d'un seuil donné ou un dépassement d'une température limite du pneu.

Lorsque le dispositif communicant est positionné sur un siège de l'aéronef, l'évènement peut être une détection de présence passager sur le siège ou d'absence de passager sur le siège, ou un état de fermeture de ceinture de sécurité, ou position abaissée ou position relevée du siège ou position abaissée de tablette ou position relevée de tablette (pour certaines phase de vol comme les phases d'atterrissage et de décollage, les sièges et tablettes doivent être en position relevée) ou dépassement d'une durée d'assise trop longue (pour par exemple suggérer au passager de réaliser des exercices ou alerter le personnel navigant).

Dans le cas où le dispositif communicant mesure une caractéristique sur un siège, il peut mesurer le poids supporté par le siège (pour par exemple affiner la répartition courante des masses dans l'aéronef) ou des caractéristiques de mouvements ou de température du siège (par exemple température de textile) / du passager ou des caractéristiques circulatoires du passager comme ses pulsations cardiaques ou sa pression sanguine.

Toutes ces informations peuvent être utiles pour estimer un état de stress des passagers et évaluer le confort passager pendant le vol. Toutes ces mesures et détections d'évènement permettent de mieux évaluer en temps réel les conditions dans l'aéronef ce qui facilite grandement le travail du personnel naviguant tout en permettant d'étudier ces conditions de vol a posteriori.

Il est à noter que le nombre de canaux C1, C2, C3, C4... CX, CY, CZ et/ou de fenêtres F1, F2, F3, F4 et/ou la taille des canaux et/ou la taille des fenêtres peuvent être paramétrés par le ou les concentrateurs pour maximiser certaines caractéristiques de fonctionnement du système S1 comme sa vitesse de communication, le débit de données transmissible, le nombre maximum de dispositifs communicants pouvant communiquer avec le même concentrateur. Ainsi, la taille des fenêtres et/ou des canaux peut être variable d'un cycle à l'autre.

Dans le cas d'un protocole de communication LoRa, les canaux ont une taille fixe, seule la taille et le nombre de canaux et/ou le nombre de fenêtres étant susceptibles d'ajustement.

Il est également à noter que dans les modes de réalisation du système S1 présentant plusieurs concentrateurs, les règles d'affectation des fenêtres, des canaux et des dispositifs communicants peut se faire de manière à maximiser certaines desdites caractéristiques de fonctionnement du système S1.

Dans le même but, on peut planifier une variation des fréquences ou plages de fréquences dédiées aux canaux.

On peut aussi prévoir qu'un même canal soit dédié à la transmission de données vers un seul et unique concentrateur.

On peut aussi prévoir que les canaux et / ou fenêtres attribuées à un même concentrateur changent d'un cycle à l'autre pour maximiser au moins une desdites caractéristique de fonctionnement du système.

On peut aussi prévoir que les canaux et les fenêtres soient associés entre eux en fonction de règles d'équilibrage de charge entre concentrateurs de données ou des règles de minimisation de risque de collision ou d'erreur de transmission de données.

Il est à noter que le signal de paramétrage S0 d'un cycle est ici applicable pour un cycle, qui est préférentiellement le cycle en cours, mais il pourrait être applicable pour un ou plusieurs cycles consécutifs à venir, en incluant ou non le cycle courant.

On préfère toutefois que ce signal de paramétrage S0 soit applicable uniquement au cycle courant car cela améliore la réactivité du système de communication S1 et sa capacité à enrôler ou exclure rapidement un nouveau dispositif communicant sans attendre la fin du cycle en cours.

Dans le cas où, comme sur la figure 5, le système de communication S1 pour un aéronef comporte plusieurs concentrateurs K1a, K2b, K3c, on pourra faire en sorte que chaque concentrateur émette sa propre référence de temps T0, les références de temps T0 de chacun de ces concentrateurs étant émises à tour de rôle tout en étant synchronisées / recalées entre elles via une communication entre ces concentrateurs pour que leurs oscillateurs respectifs soient régulièrement synchronisés par exemple à l'aide d'un oscillateur principal du système.

Dans ce mode les références temps T0 envoyées par les différents concentrateurs sont cohérentes entre elles et cela même si ces concentrateurs n'émettent pas en même temps pour éviter des collisions.

Ce mode permet de recaler l'ensemble des oscillateurs des dispositifs communicants du système autour d'une référence temporelle principale du système S1.

Dans certains au moins de ses modes de réalisation, la présente invention permet de :
- programmer les fenêtres de manière centralisée pour limiter les temps d'attente entre les fenêtres affectées et ainsi supprimer les attentes inutiles pour optimiser la bande passante disponible ;
- de garantir la possibilité pour chaque dispositif de communiquer de manière régulière sur une ou plusieurs fenêtres dédiées ;
- de permettre une basse consommation d'énergie et un gain d'autonomie des dispositifs puisque chaque dispositif communicant peut être programmé pour mettre en veille certaines au moins de ses fonctionnalités dès qu'un canal et une fenêtre lui a été affectée et pour réactiver (de manière cadencée) ces fonctions uniquement pour pouvoir émettre des données pendant la ou les fenêtres qui lui sont affectées ;

- de ségréguer les transmissions de systèmes de communication appartenant à des aéronefs voisins ;
- de garantir la possibilité pour chaque dispositif de communiquer pendant le cycle en cours, lorsqu'il détecte un événement, sans avoir à attendre un nouveau cycle de fonctionnement du système (communications irrégulières) ;
- de limiter le besoin de routage de chaque message contenant des données envoyées par un dispositif communicant (les canaux et fenêtres étant affectés au début du cycle) ;
- de rapidement intégrer un nouveau dispositif communicant au système, cette intégration étant automatisée ;
- de limiter le risque de collision lors de l'émission des données par les dispositifs communicants ;
- la possibilité de réserver un ou plusieurs canaux pour transmettre des données de type irrégulier suite à une détection d'évènement ;
- de limiter au maximum le besoin d'intervention de techniciens.

Chaque dispositif communicant n'émettant que pendant une fenêtre temporelle qui lui est attribuée, dans la pluralité des dispositifs communicants il n'y a pas deux émissions simultanées ce qui permet une tenue facilitée des contraintes d'émissions dans un aéronef (DO-160 - "Environmental Conditions and Test Procedures for Airborne Equipment - Radio Technical Commission for Aeronautics (RTCA)" et ED-14 - "Environmental Conditions and Test Procedures for Airborne Equipment - European Organisation for Civil Aviation Equipment (EUROCAE)").

## Revendications

1. Système de communication (S1) pour aéronef (a), comprenant :
- un premier concentrateur de données (K1a)
- une première pluralité de dispositifs communicants (Di1, Di2, Di3... DiX, DiY, DiZ), chacun de ces dispositifs communicants étant adapté à envoyer des données au premier concentrateur (K1a) par transmission sans fil, le premier concentrateur étant adapté pour réaliser un traitement des données envoyées par lesdits dispositifs communicants et reçues par ce premier concentrateur, **caractérisé en ce que** le premier concentrateur est agencé pour diffuser, par transmission sans fil, au moins un signal de paramétrage (S0) d'au moins un cycle de fonctionnement du système de communication (S1) et chaque dispositif communicant donné de la première pluralité de dispositifs communicants est agencé pour envoyer au premier concentrateur (K1a), en réponse à cet au moins un signal de paramétrage (S0) du cycle, un signal d'identification (Id1 ou Id2) propre à ce dispositif communicant donné (Di1 ou Di2), le premier concentrateur (K1a) étant agencé pour diffuser un ou plusieurs signaux d'affectation (J1 ou J2) pour affecter une pluralité de fenêtres temporelles (F1 ou F2) distinctes les unes des autres et valables pour le cycle de fonctionnement, chaque fenêtre temporelle étant affectée à un seul des dispositifs communicants dont le premier concentrateur (K1a) a reçu un signal d'identification propre et étant associée à au moins un canal de communication (C1, C2, C3 ou C4) d'une pluralité de canaux de communication de la transmission sans fil, chaque dispositif communicant donné étant agencé pour émettre des données (R1, R2, R3... RX, RY, RZ) à l'attention du premier concentrateur (K1a) via ledit au moins un canal de communication associé à la fenêtre temporelle affectée à ce dispositif communicant donné uniquement pendant cette fenêtre temporelle.

2. Système de communication pour aéronef selon la revendication 1, dans lequel :
- ledit au moins un signal de paramétrage (S0) de cycle contient un premier paramètre de durée (D1) propre au cycle paramétré (en l'occurrence le cycle courant) et un second paramètre de durée (D2) propre au cycle paramétré ;
- les dispositifs communicants étant agencés pour envoyer, au premier concentrateur (K1a), leurs signaux d'identification respectifs pendant une première plage temporelle (P1) de paramétrage du cycle qui est définie en fonction dudit premier paramètre de durée (D1) ; et
- ledit premier concentrateur (K1a) étant agencé pour attendre le début d'une seconde plage temporelle (P2) de paramétrage du cycle qui est postérieure à ladite première plage temporelle (P1) de paramétrage du cycle et qui est définie en fonction dudit second paramètre de durée (D2) pour diffuser au moins un signal d'affectation contenant des paramètres d'affectation, chaque paramètre d'affectation donné associant à chaque dispositif communicant donné (Di1, Di2,... DiX, DiY, DiZ), ladite au moins une fenêtre temporelle affectée (F1, F2,... FN) à ce dispositif communicant donné (Di1, Di2,... DiX, DiY, DiZ) et associée à un canal de communication donné.

3. Système de communication pour aéronef selon l'une quelconque des revendications 1 ou 2, dans lequel ledit premier concentrateur de données (K1a) est lié fonctionnellement à un premier oscillateur pour mesurer un temps écoulé, ledit au moins un signal de paramétrage (S0) de cycle contenant une référence de temps (Ta) et chaque dispositif communicant donné (Di1, Di2, ...DiX, DiY, DiZ) comportant un oscillateur qui lui est propre et qui est agencé pour estimer une durée temporelle écoulée à compter de la réception de ladite référence de temps (Ta) par ce dispositif communicant donné.

4. Système de communication pour aéronef selon l'une quelconque des revendications 1 à 3, dans lequel chaque dispositif communicant donné (Di1, Di2, ...DiX, DiY, DiZ) comporte une source d'alimentation en énergie électrique qui lui est propre et qui délivre une énergie électrique nécessaire au fonctionnement de ce dispositif communicant donné.

5. Système de communication pour aéronef selon l'une quelconque des revendications 1 à 4, dans lequel le premier concentrateur (K1a) est agencé pour recevoir, via un canal de communication (C1x) commun à plusieurs des dispositifs communicants (Di1, Di2, Di3, ...DiX, DiY, DiZ) de la première pluralité de dispositifs communicants, des données (R1, R2, R3, ...RX, RY, RZ) envoyées par ces dispositifs communicants et chacun de ces dispositifs communicants étant d'une part agencé pour détecter si le canal de communication (C1x) commun est en cours d'utilisation par un autre des dispositifs communicants (Di1, Di2, Di3, ...DiX, DiY, DiZ) et d'autre part agencé pour envoyer des données audit premier concentrateur de données (K1a) via ce canal de communication (C1x) commun, uniquement lorsque aucun des autres dispositifs communicants (Di1, Di2, Di3, ...DiX, DiY, DiZ) n'utilise ce canal de communication commun (C1x).

6. Système de communication pour aéronef selon l'une quelconque des revendications 1 à 5, dans lequel chaque dispositif communicant donné de la première pluralité de dispositifs communicants est agencé pour sélectionner un canal de communication de ladite pluralité de canaux de communication (C1, C2, C3, C4,... CX, CY, CZ) et à utiliser ce canal de communication sélectionné pour envoyer son signal d'identification propre au premier concentrateur (K1a).

7. Système de communication pour aéronef selon la revendication 6, dans lequel chaque dispositif communicant donné de la première pluralité de dispositifs communicants est agencé pour effectuer ladite sélection de canal de communication à l'aide d'une fonction de sélection aléatoire de canal.

8. Système de communication pour aéronef selon l'une quelconque des revendications 6 ou 7, dans lequel chaque dispositif communicant donné (Dil, Di2, Di3, ...DiX, DiY, DiZ) de la première pluralité de dispositifs communicants est agencé pour détecter si le canal sélectionné pour envoyer le signal d'identification est en cours d'utilisation par un autre desdits dispositifs communicants et pour envoyer son signal d'identification propre au premier concentrateur (K1a) via ce canal sélectionné uniquement lorsqu'aucun des autres dispositifs communicants n'utilise ce canal sélectionné.

9. Système de communication pour aéronef selon la revendication 8, dans lequel chaque dispositif communicant donné de la première pluralité de dispositifs communicants est agencé pour décompter une durée et pour débuter l'envoi de son signal d'identification propre après que la durée décomptée est égale à une valeur aléatoire comprise entre une durée minimale prédéterminée et une durée maximale prédéterminée.

10. Système de communication pour aéronef selon l'une quelconque des revendications 1 à 9, dans lequel les données envoyées par certains au moins des dispositifs communicants sont des mesures effectuées par capteur, ces mesures étant comprises dans le groupe de mesures comprenant une mesure d'une caractéristique physique propre à un siège donné de l'aéronef, une mesure d'une caractéristique physique propre à une roue donnée de l'aéronef, une mesure de déformation de siège d'aéronef, une mesure de position de siège d'aéronef, une mesure de pression, une mesure de température.

11. Système de communication pour aéronef selon l'une quelconque des revendications 1 à 10, comportant un module d'estimation d'éloignement pour estimer pour chaque dispositif communicant donné dont le premier concentrateur a reçu un signal d'identification, une valeur d'éloignement de ce dispositif communicant donné vis-à-vis dudit premier concentrateur (K1a), ce module d'estimation d'éloignement étant relié fonctionnellement audit premier concentrateur pour lui transmettre les valeurs d'éloignement estimées de chacun de ces dispositifs communicants donnés et ledit premier concentrateur de données étant agencé pour, en fonction de ces valeurs d'éloignement estimées, identifier ceux des dispositifs communicants qui sont situés dans une zone de ségrégation propre à ce premier concentrateur de données et pour n'envoyer le ou les signaux d'affectation qu'aux dispositifs communicants situés dans cette zone de ségrégation.

12. Système de communication pour aéronef selon la revendication 11, comportant, en plus dudit premier concentrateur de données (K1a), plusieurs autres concentrateurs de données (K2a, K3a), ledit module d'estimation d'éloignement étant agencé pour estimer pour chaque dispositif communicant, au moins une valeur d'éloignement entre ce dispositif communicant et au moins un desdits concentrateurs de données, le système comportant un module d'affectation agencé pour, en fonction de valeurs d'éloignement estimées entre les dispositifs communicants et les concentrateurs, affecter chacun des dispositifs communicants de la première pluralité de dispositifs communicants à un seul de ces concentrateurs de données et chacun de ces dispositifs communicants étant agencé pour ne transmettre des données qu'au concentrateur auquel il est affecté.

13. Système de communication pour aéronef selon l'une quelconque des revendications 1 à 12, dans lequel le premier concentrateur est agencé pour affecter au moins une fenêtre temporelle valable pour un canal de communication donné et pour une pluralité de cycles de fonctionnement successifs du système, à un dispositif communicant non encore affecté à cette fenêtre temporelle si le premier concentrateur ne reçoit aucune donnée d'un dispositif communicant via cette fenêtre pendant un nombre entier de cycles de fonctionnement successifs.

14. Procédé de communication dans un aéronef équipé d'un système de communication (S1) pour aéronef comprenant :
- un premier concentrateur de données (K1a)
- une première pluralité de dispositifs communicants (Dil, Di2, Di3, ...DiX, DiY, DiZ), chacun de ces dispositifs communicants étant adapté à envoyer des données au premier concentrateur (K1a) par transmission sans fil, le premier concentrateur étant adapté pour réaliser un traitement des données envoyées par lesdits dispositifs communicants et reçues par ce premier concentrateur, **caractérisé en ce que** :
- le premier concentrateur diffuse, par transmission sans fil, au moins un signal de paramétrage (S0) d'au moins un un cycle de fonctionnement du système de communication (S1) ; puis
- chaque dispositif communicant donné de la première pluralité de dispositifs communicants envoie au premier concentrateur (K1a), en réponse à cet au moins un signal de paramétrage (S0) du cycle, un signal d'identification propre à ce dispositif communicant donné; puis
- le premier concentrateur (K1a) diffuse un ou plusieurs signaux d'affectation pour affecter une pluralité de fenêtres temporelles distinctes les unes des autres et valables pour le cycle de fonctionnement, chaque fenêtre temporelle étant affectée à un seul des dispositifs communicants dont le premier concentrateur (K1a) a reçu un signal d'identification propre et étant associée à au moins un canal de communication d'une pluralité de canaux de communication de la transmission sans fil ; puis
- chaque dispositif communicant donné émet des données (R1, R2, R3, ...RX, RY, RZ) à l'attention du premier concentrateur (K1a), via ledit au moins un canal de communication (C1) associé à la fenêtre temporelle affectée à ce dispositif communicant donné, ces données étant émises uniquement pendant ladite fenêtre temporelle affectée à ce seul dispositif communicant donné.

## Patentansprüche

1. Kommunikationssystem (S1) für ein Luftfahrzeug (a), umfassend:
- einen ersten Datenkonzentrator (K1a)
- eine erste Vielzahl von kommunizierenden Vorrichtungen (Dil, Di2, Di3... DiX, DiY, DiZ), wobei jede dieser kommunizierenden Vorrichtungen geeignet ist, Daten an den ersten Konzentrator (K1a) mittels drahtloser Übertragung zu senden, wobei der erste Konzentrator geeignet ist, eine Verarbeitung der von den genannten kommunizierenden Vorrichtungen gesendeten und von diesem ersten Konzentrator empfangenen Daten durchzuführen, **dadurch gekennzeichnet, dass** der erste Konzentrator ausgebildet ist, mittels drahtloser Übertragung mindestens ein Parametrisierungssignal (S0) mindestens eines Betriebszyklus des Kommunikationssystems (S1) zu senden, und jede gegebene kommunizierende Vorrichtung der ersten Vielzahl von kommunizierenden Vorrichtungen ausgebildet ist, dem ersten Konzentrator (K1a) in Antwort auf dieses mindestens eine Parametrisierungssignal (S0) des Zyklus ein für diese gegebene kommunizierende Vorrichtung (Di1 oder Di2) spezifisches Identifikationssignal (Id1 oder Id2) zu senden, wobei der erste Konzentrator (K1a) ausgebildet ist, ein oder mehrere Zuweisungssignale (J1 oder J2) zu senden, um eine Vielzahl von Zeitfenstern (F1 oder F2), die voneinander verschieden und für den Betriebszyklus gültig sind, zuzuweisen, wobei jedes Zeitfenster einer einzigen der kommunizierenden Vorrichtungen zugewiesen wird, von der der erste Konzentrator (K1a) ein spezifisches Identifikationssignal empfangen hat, und mit mindestens einem Kommunikationskanal (C1, C2, C3 oder C4) einer Vielzahl von Kommunikationskanälen der drahtlosen Übertragung verbunden ist, wobei jede gegebene kommunizierende Vorrichtung ausgebildet ist, Daten (R1, R2, R3... RX, RY, RZ) an den ersten Konzentrator (K1a) über den genannten mindestens einen Kommunikationskanal zu senden, der mit dem Zeitfenster verbunden ist, das dieser gegebenen kommunizierenden Vorrichtung nur während dieses Zeitfensters zugewiesen wurde.

2. Kommunikationssystem für ein Luftfahrzeug nach Anspruch 1, bei dem:
- das genannte mindestens eine Parametrisierungssignal (S0) des Zyklus einen ersten Dauerparameter (D1) enthält, der für den parametrisierten Zyklus (im vorliegenden Fall den aktuellen Zyklus) spezifisch ist, sowie einen zweiten Dauerparameter (D2), der für den parametrisierten Zyklus spezifisch ist;
- wobei die kommunizierenden Vorrichtungen ausgebildet sind, dem ersten Konzentrator (K1a) ihre jeweiligen Identifikationssignale während eines ersten Zeitbereichs (P1) der Parametrisierung des Zyklus zu senden, der in Abhängigkeit von dem genannten ersten Dauerparameter (D1) definiert ist; und
- wobei der genannte erste Konzentrator (K1a) ausgebildet ist, den Beginn eines zweiten Zeitbereichs (P2) der Parametrisierung des Zyklus abzuwarten, der nach dem ersten Zeitbereich (P1) der Parametrisierung des Zyklus ist und der in Abhängigkeit von dem genannten zweiten Dauerparameter (D2) definiert ist, um mindestens ein Zuweisungssignal zu senden, das Zuweisungsparameter enthält, wobei jeder gegebene Zuweisungsparameter mit jeder gegebenen kommunizierenden Vorrichtung (Dil, Di2, ... DiX, DiY, DiZ) das genannte mindestens eine Zeitfenster (F1, F2, ... FN) verbindet, das dieser gegebenen kommunizierenden Vorrichtung (Dil, Di2, ... DiX, DiY, DiZ) zugewiesen und mit einem gegebenen Kommunikationskanal verbunden ist.

3. Kommunikationssystem für ein Luftfahrzeug nach einem der Ansprüche 1 oder 2, bei dem der genannte erste Datenkonzentrator (K1a) funktional mit einem ersten Oszillator verbunden ist, um eine verstrichene Zeit zu messen, wobei das genannte mindestens eine Parametrisierungssignal (S0) des Zyklus eine Zeitreferenz (T0) enthält und jede gegebene kommunizierende Vorrichtung (Dil, Di2, ...DiX, DiY, DiZ) einen Oszillator umfasst, der für sie spezifisch und ausgebildet ist, eine verstrichene Zeitdauer gerechnet ab dem Empfang der genannten Zeitreferenz (T0) durch diese gegebene kommunizierende Vorrichtung zu schätzen.

4. Kommunikationssystem für ein Luftfahrzeug nach einem der Ansprüche 1 bis 3, bei dem jede gegebene kommunizierende Vorrichtung (Dil, Di2, ...DiX, DiY, DiZ) eine Quelle zur Versorgung mit elektrischer Energie umfasst, die für sie spezifisch ist und die eine elektrische Energie liefert, die für den Betrieb dieser gegebenen kommunizierenden Vorrichtung notwendig ist.

5. Kommunikationssystem für ein Luftfahrzeug nach einem der Ansprüche 1 bis 4, bei dem der erste Konzentrator (K1a) ausgebildet ist, über einen Kommunikationskanal (C1x), der mehreren kommunizierenden Vorrichtungen (Dil, Di2, Di3, ...DiX, DiY, DiZ) der ersten Vielzahl von kommunizierenden Vorrichtungen gemeinsam ist, Daten (R1, R2, R3, ...RX, RY, RZ) zu empfangen, die von diesen kommunizierenden Vorrichtungen gesendet werden, und wobei jede dieser kommunizierenden Vorrichtungen einerseits ausgebildet ist, zu erfassen, ob der gemeinsame Kommunikationskanal (C1x) gerade von einer anderen kommunizierenden Vorrichtung (Dil, Di2, Di3, ...DiX, DiY, DiZ) genutzt wird, und andererseits ausgebildet ist, Daten an den genannten ersten Datenkonzentrator (K1a) über diesen gemeinsamen Kommunikationskanal (C1x) nur dann zu senden, wenn keine der anderen kommunizierenden Vorrichtungen (Dil, Di2, Di3, ...DiX, DiY, DiZ) diesen gemeinsamen Kommunikationskanal (C1x) nutzt.

6. Kommunikationssystem für ein Luftfahrzeug nach einem der Ansprüche 1 bis 5, bei dem jede gegebene kommunizierende Vorrichtung der ersten Vielzahl von kommunizierenden Vorrichtungen ausgebildet ist, einen Kommunikationskanal der genannten Vielzahl von Kommunikationskanälen (C1, C2, C3, C4, ... CX, CY, CZ) auszuwählen und diesen ausgewählten Kommunikationskanal zu nutzen, um ihr spezifisches Identifikationssignal an den ersten Konzentrator (K1a) zu senden.

7. Kommunikationssystem für ein Luftfahrzeug nach Anspruch 6, bei dem jede gegebene kommunizierende Vorrichtung der ersten Vielzahl von kommunizierenden Vorrichtungen ausgebildet ist, die genannte Auswahl des Kommunikationskanals mit Hilfe einer Funktion zur zufälligen Kanalauswahl vorzunehmen.

8. Kommunikationssystem für ein Luftfahrzeug nach einem der Ansprüche 6 oder 7, bei dem jede gegebene kommunizierende Vorrichtung (Dil, Di2, Di3, ...DiX, DiY, DiZ) der ersten Vielzahl von kommunizierenden Vorrichtungen ausgebildet ist, zu erfassen, ob der zum Senden des Identifikationssignals ausgewählte Kanal gerade von einer anderen der genannten kommunizierenden Vorrichtungen genutzt wird, und ihr spezifisches Identifikationssignal an den ersten Konzentrator (K1a) über diesen ausgewählten Kanal nur dann zu senden, wenn keine der anderen kommunizierenden Vorrichtungen diesen ausgewählten Kanal nutzt.

9. Kommunikationssystem für ein Luftfahrzeug nach Anspruch 8, bei dem jede gegebene kommunizierende Vorrichtung der ersten Vielzahl von kommunizierenden Vorrichtungen ausgebildet ist, eine Dauer zu zählen und das Senden ihres spezifischen Identifikationssignals zu beginnen, nachdem die gezählte Dauer gleich einem Zufallswert ist, der zwischen einer vorbestimmten minimalen Dauer und einer vorbestimmten maximalen Dauer liegt.

10. Kommunikationssystem für ein Luftfahrzeug nach einem der Ansprüche 1 bis 9, bei dem die Daten, die von mindestens einigen der kommunizierenden Vorrichtungen gesendet werden, von dem Sensor durchgeführte Messungen sind, wobei diese Messungen in der Gruppe von Messungen enthalten sind, die eine Messung einer physikalischen Eigenschaft, die spezifisch für einen gegebenen Sitz des Luftfahrzeugs ist, eine Messung einer physikalischen Eigenschaft, die spezifisch für ein gegebenes Rad des Luftfahrzeugs ist, eine Messung einer Verformung eines Sitzes des Luftfahrzeugs, eine Messung einer Position des Sitzes des Luftfahrzeugs, eine Druckmessung, eine Temperaturmessung umfassen.

11. Kommunikationssystem für ein Luftfahrzeug nach einem der Ansprüche 1 bis 10, umfassend ein Abstandsschätzmodul, um für jede gegebene kommunizierende Vorrichtung, von der ein erster Konzentrator ein Identifikationssignal empfangen hat, einen Abstandswert dieser gegebenen kommunizierenden Vorrichtung in Bezug auf den genannten ersten Konzentrator (K1a) zu schätzen, wobei dieses Abstandsschätzmodul funktional mit dem genannten ersten Konzentrator verbunden ist, um ihm die geschätzten Abstandswerte jeder dieser gegebenen kommunizierenden Vorrichtungen zu übertragen, und der genannte erste Datenkonzentrator ausgebildet ist, in Abhängigkeit von diesen geschätzten Abstandswerten diejenigen der kommunizierenden Vorrichtungen zu identifizieren, die sich in einer Segregationszone befinden, die für diesen ersten Datenkonzentrator spezifisch ist, und das oder die Zuweisungssignale nur an die kommunizierenden Vorrichtungen zu senden, die sich in dieser Segregationszone befinden.

12. Kommunikationssystem für ein Luftfahrzeug nach Anspruch 11, umfassend, zusätzlich zu dem genannten ersten Datenkonzentrator (K1a), mehrere weitere Datenkonzentratoren (K2a, K3a), wobei das genannte Abstandsschätzmodul ausgebildet ist, für jede kommunizierende Vorrichtung mindestens einen Abstandswert zwischen dieser kommunizierenden Vorrichtung und mindestens einem der genannten Datenkonzentratoren zu schätzen, wobei das System ein Zuweisungsmodul umfasst, das ausgebildet ist, in Abhängigkeit von den zwischen den kommunizierenden Vorrichtungen und den Konzentratoren geschätzten Abstandswerten jede der kommunizierenden Vorrichtungen der ersten Vielzahl von kommunizierenden Vorrichtungen einem einzigen dieser Datenkonzentratoren zuzuweisen, und wobei jede dieser kommunizierenden Vorrichtungen ausgebildet ist, nur Daten an den Konzentrator zu übertragen, dem sie zugewiesen ist.

13. Kommunikationssystem für ein Luftfahrzeug nach einem der Ansprüche 1 bis 12, bei dem der erste Konzentrator ausgebildet ist, mindestens ein Zeitfenster, das für einen gegebenen Kommunikationskanal und für eine Vielzahl von aufeinanderfolgenden Betriebszyklen des Systems gültig ist, einer kommunizierenden Vorrichtung zuzuweisen, die diesem Zeitfenster noch nicht zugeordnet ist, wenn der erste Konzentrator kein Datenelement einer kommunizierenden Vorrichtung über dieses Fenster über eine ganz Zahl von aufeinanderfolgenden Betriebszyklen empfängt.

14. Verfahren zur Kommunikation in einem Luftfahrzeug, das mit einem Kommunikationssystem (S1) für ein Luftfahrzeug ausgestattet ist, umfassend:
- einen ersten Datenkonzentrator (K1a)
- eine erste Vielzahl von kommunizierenden Vorrichtungen (Dil, Di2, Di3, ...DiX, DiY, DiZ), wobei jede dieser kommunizierenden Vorrichtungen geeignet ist, Daten an den ersten Konzentrator (K1a) mittels drahtloser Übertragung zu senden, wobei der erste Konzentrator geeignet ist, eine Verarbeitung der von den genannten kommunizierenden Vorrichtungen gesendeten und von diesem ersten Konzentrator empfangenen Daten durchzuführen, **dadurch gekennzeichnet, dass**:
- der erste Konzentrator mittels drahtloser Übertragung mindestens ein Parametrisierungssignal (S0) mindestens eines Betriebszyklus des Kommunikationssystems (S1) sendet; dann
- jede gegebene kommunizierende Vorrichtung der ersten Vielzahl von kommunizierenden Vorrichtungen dem ersten Konzentrator (K1a) in Antwort auf dieses mindestens eine Parametrisierungssignal (S0) des Zyklus ein Identifikationssignal sendet, das für diese gegebene Kommunikationsvorrichtung spezifisch ist; dann
- der erste Konzentrator (K1a) ein oder mehrere Zuweisungssignale sendet, um eine Vielzahl von Zeitfenstern, die zueinander verschieden und für den Betriebszyklus gültig sind, zuzuweisen, wobei jedes Zeitfenster einer einzigen der kommunizierenden Vorrichtungen zugewiesen wird, von der der erste Konzentrator (K1a) ein spezifisches Identifikationssignal empfangen hat, und mit mindestens einem Kommunikationsanal einer Vielzahl von Kommunikationskanälen der drahtlosen Übertragung verbunden ist; und dann
- jede gegebene kommunizierende Vorrichtung Daten (R1, R2, R3, ...RX, RY, RZ) an den ersten Konzentrator (K1a) über den genannten mindestens einen Kommunikationskanal (C1), der mit dem Zeitfenster verbunden ist, das dieser gegebenen kommunizierenden Vorrichtung zugewiesen ist, sendet, wobei diese Daten nur während des genannten Zeitfensters, das dieser einzigen gegebenen kommunizierenden Vorrichtung zugewiesen ist, gesendet werden.

## Claims

1. Communication system (S1) for an aircraft (a), comprising:
a first data concentrator (K1a)
a first plurality of communicating devices (Dil, Di2, Di3... DiX, DiY, DiZ), each of these communicating devices being adapted to send data to the first concentrator (K1a) by wireless transmission, the first concentrator being adapted to process data sent by said communicating devices and received by this first concentrator, **characterised in that** the first concentrator is arranged to broadcast, by wireless transmission, at least one parameterisation signal (S0) of at least one operating cycle of the communication system (S1) and each given communicating device of the first plurality of communicating devices is arranged to send to the first concentrator (K1a), in response to this at least one parameterisation signal (S0) of the cycle, an identification signal (Id1 or Id2) unique to this given communicating device (Di1 or Di2), the first concentrator (K1a) being arranged to broadcast one or more assignment signals (J1 or J2) to assign a plurality of time windows (F1 or F2) separate from one another, valid for the operating cycle, each time window being assigned to only one of the communicating devices, the first concentrator (K1a) of which has received a unique identification signal and being associated with at least one communication channel (C1, C2, C3 or C4) of a plurality of communication channels of the wireless transmission, each given communicating device being arranged to transmit data (R1, R2, R3... RX, RY, RZ) intended for the first concentrator (K1a) via said at least one communication channel associated with the time window assigned to this given communicating device only during this time window.

2. Communication system for an aircraft according to claim 1, wherein:
said at least one cycle parameterisation signal (S0) contains a first parameter of duration (D1) unique to the parameterised cycle (in this case, the current cycle) and a second parameter of duration (D2) unique to the parameterised cycle;
the communicating devices being arranged to send their respective identification signals to the first concentrator (K1a), during a first time range (P1) of parameterisation of the cycle which is defined according to said first parameter of duration (D1); and
said first concentrator (K1a) being arranged to await the start of a second time range (P2) of parameterisation of the cycle which is after said first time range (P1) of parameterisation of the cycle and which is defined according to said second parameter of duration (D2) to broadcast at least one assignment signal containing assignment parameters, each given assignment parameter associated to each given communicating device (Di1, Di2,... DiX, DiY, DiZ), said at least one time window assigned (F1, F2,... FN) to this given communicating device (Di1, Di2,... DiX, DiY, DiZ) and associated with a given communication channel.

3. Communication system for an aircraft according to any one of claims 1 or 2, wherein said first data concentrator (K1a) is operationally linked to a first oscillator to measure an elapsed time, said at least one cycle parameterisation signal (S0) containing a time reference (T0) and each given communicating device (Di1, Di2, ...DiX, DiY, DiZ) comprising an oscillator which is unique to it and which is arranged to estimate an elapsed time duration from the receipt of said time reference (T0) by this given communicating device.

4. Communication system for an aircraft according to any one of claims 1 to 3, wherein each given communicating device (Dil, Di2, ...DiX, DiY, DiZ) comprises an electric energy power source which is unique to it, and which delivers an electric energy necessary for the operation of this given communicating device.

5. Communication system for an aircraft according to any one of claims 1 to 4, wherein the first concentrator (K1a) is arranged to receive, via a communication channel (C1x) common to several of the communicating devices (Dil, Di2, Di3, ...DiX, DiY, DiZ) of the first plurality of communicating devices, data (R1, R2, R3, ...RX, RY, RZ) sent by these communicating devices and each of these communicating devices being, on the one hand, arranged to detect if the common communication channel (C1x) is in use by another of the communicating devices (Dil, Di2, Di3, ...DiX, DiY, DiZ) and on the other hand, arranged to send data to said first data concentrator (K1a) via this common communication channel (C1x), only when none of the other communicating devices (Dil, Di2, Di3, ...DiX, DiY, DiZ) uses this common communication channel (C1x).

6. Communication system for an aircraft according to one of claims 1 to 5, wherein each given communicating device of the first plurality of communicating devices is arranged to select a communication channel of said plurality of communication channels (C1, C2, C3, C4,... CX, CY, CZ) and to use this selected communication channel to send its unique identification signal to the first concentrator (K1a).

7. Communication system for an aircraft according to claim 6, wherein each given communicating device of the first plurality of communicating devices is arranged to perform said selection of communication channel using a random channel selection function.

8. Communication system for an aircraft according to any one of claims 6 or 7, wherein each given communicating device (Dil, Di2, Di3, ...DiX, DiY, DiZ) of the first plurality of communicating devices is arranged to detect if the channel selected to send the identification signal is in use by another of said communicating devices and to send its unique identification signal to the first concentrator (K1a) via this selected channel only when none of the other communicating devices uses this selected channel.

9. Communication system for an aircraft according to claim 8, wherein each given communicating device of the first plurality of communicating devices is arranged to count a duration and to start the sending of its unique identification signal after the counted duration is equal to a random value comprised between a predetermined minimum duration and a predetermined maximum duration.

10. Communication system for an aircraft according to any one of claims 1 to 9, wherein the data sent by at least some of the communicating devices are measurements taken by sensor, these measurements being comprised in the group of measurements comprising a measurement of a physical feature unique to a given seat of the aircraft, a measurement of a physical feature unique to a given wheel of the aircraft, an aircraft seat deformation measurement, an aircraft seat position measurement, a pressure measurement, a temperature measurement.

11. Communication system for an aircraft according to any one of claims 1 to 10, comprising a distance estimation module to estimate, for each given communicating device, the first concentrator of which has received an identification signal, a distance value of this given communicating device vis-à-vis said first concentrator (K1a), this distance estimation module being operationally connected to said first concentrator to transmit the estimated distance values of each of these given communicating devices to it, and said first data concentrator being arranged to, according to these estimated distance values, identify those of the communicating devices which are located in a segregation zone unique to this first data concentrator and to only send the assignment signal(s) to the communicating devices located in this segregation zone.

12. Communication system for an aircraft according to claim 11, comprising, in addition to said first data concentrator (K1a), several other data concentrators (K2a, K3a), said distance estimation module being arranged to estimate, for each communicating device, at least one distance value between this communicating device and at least one of said data concentrators, the system comprising an assignment module arranged to, according to estimated distance values between the communicating devices and the concentrators, assign each of the communicating devices of the first plurality of communicating devices to only one of these data concentrators and each of these communicating devices being arranged to only transmit data to the concentrator to which it is assigned.

13. Communication system for an aircraft according to any one of claims 1 to 12, wherein the first concentrator is arranged to assign at least one time window, valid for a given communication channel and for a plurality of successive operating cycles of the system, to a communicating device not yet assigned to this time window, if the first concentrator receives no data from a communicating device via this window during a whole number of successive operating cycles.

14. Method for communicating in an aircraft equipped with a communication system (S1) for an aircraft comprising:
a first data concentrator (K1a)
a first plurality of communicating devices (Dil, Di2, Di3, ...DiX, DiY, DiZ), each of these communicating devices being adapted to send data to the first concentrator (K1a) by wireless transmission, the first concentrator being adapted to process data sent by said communicating devices and received by this first concentrator, **characterised in that**:
the first concentrator broadcasts, by wireless transmission, at least one parameterisation signal (S0) of at least one operating cycle of the communication system (S1); then
each given communicating device of the first plurality of communicating devices sends a unique identification signal to this given communicating device to the first concentrator (K1a), in response to this at least one parameterisation signal (S0) of the cycle; then
the first concentrator (K1a) broadcasts one or more assignment signals to assign a plurality of time windows, separate from one another, valid for the operating cycle, each time window being assigned to only one of the communicating devices, the first concentrator (K1a) of which has received a unique identification signal and being associated with at least one communication channel of a plurality of communication channels of the wireless transmission; then
each given communicating device transmits data (R1, R2, R3, ...RX, RY, RZ) intended for the first concentrator (K1a), via said at least one communication channel (C1) associated with the time window assigned to this given communicating device, these data being transmitted only during said time window assigned to this only given communicating device.
